# EUROPÄISCHE PATENTSCHRIFT

(11) **EP 2 922 160 B1**
(45) Veröffentlichungstag und Bekanntmachung des Hinweises auf die Patenterteilung: **10.10.2018**
(21) Anmeldenummer: 15157419.1
(22) Anmeldetag: 03.03.2015
(51) Int. Cl.: H02G 3/18, H01R 13/73

(54) **Tisch- oder Geräteplattenanschlussfeld**
TABLE OR DEVICE PLATE CONNECTION FIELD
PANNEAU DE CONNEXION POUR APPAREIL OU TABLE

(30) Priorität: 06.03.2014 DE 102014102959
(43) Veröffentlichungstag der Anmeldung: 23.09.2015
(73) Patentinhaber: Schulte-Elektrotechnik GmbH & Co. KG, 58515 Lüdenscheid (DE)
(72) Erfinder: Rittinghaus, Hendrik, 58579 Schalksmühle (DE)
(74) Vertreter: Patentanwälte Dörner & Kötter PartG mbB

(56) Entgegenhaltungen:
- EP-A1- 2 302 751
- CN-U- 202 042 713
- KR-B1- 100 859 170
- US-A- 5 122 069

## Beschreibung

Die Erfindung betrifft ein Tisch- oder Geräteplattenanschlussfeld für Netzspannungsanschlüsse und/oder für Informationsanschlüsse, mit einem Gehäuse, das mit einem Kragen versehen ist, wobei ein Steckdoseneinsatz mit Steckplätzen vorgesehen ist, der in dem Gehäuse um mindestens 180° um seine Längsachse drehbar angeordnet ist.

Tisch- oder Geräteplattenanschlussfelder sind in vielfältiger Weise bekannt, vgl. bspw. EP 2 302 751 A1. Sie stellen die Netzspannung und/oder die Informationsversorgung für bewegliche Datengeräte und andere Stromverbraucher bereit. Die bekannten Vorrichtungen sind in einer Tisch- oder Geräteplatte oder einem Fußboden schwenkbar angeordnet. Zum Anschluss der Verbraucher sind die Anschlussfelder aufklappbar. Beim Aufklappen werden die Netzspannungs- und Informationsanschlüsse aus der Platte bzw. dem Fußboden freigelegt und sind somit sichtbar. Die Anschlüsse können in dieser Position zum Einstecken der Stecker der Datengeräte und/oder Stromverbraucher genutzt werden.

Bei den Tisch- oder Geräteplattenanschlussfeldern der hier betrachteten Art ist der Steckdoseneinsatz in dem Gehäuse um seine jeweilige Längsachse drehbar angeordnet. In nicht geöffnetem Zustand bildet die den Steckplätzen des Steckdoseneinsatzes abgewandte Seite die geschlossene Ansichtsseite der Anschlussfelder. Diese schließt ist in der Regel bündig mit dem sie umgebenden Kragen ab. Durch Drücken auf eine der beiden Längsseiten des Steckdoseneinsatzes erfolgt die Drehung des Steckdoseneinsatzes, so dass die Steckplätze sichtbar werden und der Steckdoseneinsatz seine Betriebsposition einnimmt. Nach dem Abziehen der Stecker kann der Steckdoseneinsatz in seine Ursprungsposition zurückgedreht werden, so dass das Anschlussfeld wieder geschlossen ist.

Die bekannten Tisch- oder Geräteplattenanschlussfelder erfüllen die an sie gestellten Anforderungen. Jedoch, insbesondere bei Einbausituationen in Umgebungen, in denen die Benutzung von Flüssigkeiten nicht ausgeschlossen ist, weisen die bekannten Anschlussfelder den Nachteil auf, dass in der Betriebsposition, in der also die Steckplätze sichtbar sind, ein ebenso bündiger Abschluss des Steckdoseneinsatzes mit dem umgebenden Kragen vorliegt, wie dies im geschlossenen Zustand des Anschlussfeldes der Fall ist. Dies beinhaltet das Risiko, dass im Falle einer sich über die Tisch- oder Arbeitsplatte bzw. dem Fußboden ergießenden Flüssigkeit diese in die Steckplätze laufen kann. Dies kann zu nicht unerheblichen Schäden führen, bei denen es im schlimmsten Fall auch zu Personenschäden kommen kann.

Hier will die Erfindung Abhilfe schaffen. Der Erfindung liegt die Aufgabe zugrunde, ein Tisch- oder Geräteplattenanschlussfeld für Netzspannungsanschlüsse und/oder Informationsanschlüsse zu schaffen, welches die Gefahr einer Beschädigung im Falle einer sich über die Platte oder den Fußboden ergießenden Flüssigkeit vermeidet. Gemäß der Erfindung wird diese Aufgabe durch die Merkmale des Patentanspruchs 1 gelöst.

Mit der Erfindung ist ein Tisch- oder Geräteplattenanschlussfeld für Netzspannungsanschlüsse und/oder Informationsanschlüsse geschaffen, welches einen Schutz für die Steckplätze im Falle einer sich über die Platte oder den Fußboden ergießende Flüssigkeit bereitstellt. Dies ist dadurch gewehrleistet, dass die Steckplätze in einem Vorsprung angeordnet sind. Dieser Vorsprung erstreckt in der Betriebsposition des Anschlussfeldes über den die Platte oder den Fußboden bündig abschließenden Kragen und ragt über diesen hinaus. Infolgedessen stellt eine sich über die Platte oder den Fußboden ergießende Flüssigkeit für die Steckplätze kein Risiko da, da durch die erhöhte Anordnung der Steckplätze das Einfließen in diese verhindert ist.

Der Vorsprung erstreckt sich über die gesamte Länge des Steckdoseneinsatzes. Hierdurch ist im Vergleich zu den aus dem Stand der Technik bekannten Anschlussfeldern der Platz für die Anbringung der Steckplätze nicht reduziert, so dass das erfindungsgemäße Anschlussfeld eine ebenso hohe Nutzbarkeit hat, wie dies bei den aus dem Stand der Technik bekannten Anschlussfeldern der Fall ist.

Weil der Vorsprung eine geringere Breite als der Steckdoseneinsatz aufweist, ist gewährleistet, dass beim Drehen des Steckdoseneinsatzes der Vorsprung nicht mit dem Gehäuse kollidiert. Es ist folglich eine einwandfreie Bedienbarkeit des erfindungsgemäßen Anschlussfeldes gewehrleistet.

Aufgrund des auf seiner dem Kragen abgewandten Seite mit Schlitzen versehenen Gehäuses ist das Abfließen der Flüssigkeiten für den Fall, bei dem die Flüssigkeit nach Überschwemmen des Kragens durch den umlaufenden Spalt zwischen Gehäuse und Steckdoseneinsatz in das Anschlussfeld eintritt, ermöglicht. Somit ist der Gefahr einer Ansammlung von Flüssigkeit im Gehäuse vorgebeugt.

Vorteilhaft weist der Kragen einen Hinterschnitt auf. Der Hinterschnitt bietet die Möglichkeit zur Aufnahme einer Dichtung, so dass sich über die Platte oder den Fußboden ergießende Flüssigkeit nicht unter den Kragen gelangen kann.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die perspektivische Darstellung eines Tisch- oder Geräteplattenanschlussfeldes in geschlossenem Zustand;
- Figur 2: die Ansicht des in Figur 1 dargestellten Tisch- oder Geräteplattenanschlussfeldes;
- Figur 3: die Draufsicht auf das in Figur 1 dargestellte Tisch- oder Geräteplattenanschlussfeld;
- Figur 4: die Seitenansicht auf das in Figur 1 dargestellte Tisch- oder Geräteplattenanschlussfeld;
- Figur 5: die Seitenansicht auf den Steckdoseneinsatz in geschlossener Position;
- Figur 6: die perspektivische Darstellung des in Figur 1 dargestellten Tischoder Geräteplattenanschlussfeldes in Betriebsposition;
- Figur 7: die Ansicht des in Figur 6 dargestellten Tisch- oder Geräteplattenanschlussfeldes;
- Figur 8: die Draufsicht auf das in Figur 6 dargestellte Tisch- oder Geräteplattenanschlussfeld;
- Figur 9: Seitenansicht des in Figur 6 dargestellten Tisch- oder Geräteplattenanschlussfeldes;
- Figur 10: die Seitenansicht auf den Steckdoseneinsatz in Betriebsposition;

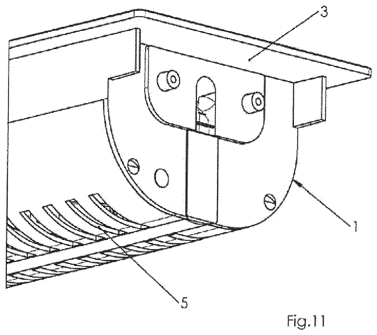

- Figur 11: eine abschnittsweise perspektivische Darstellung des Gehäuses.

Das als Ausführungsbeispiel gewählte Tisch- oder Geräteplattenanschlussfeld für Netzspannungsanschlüsse und/oder für Informationsanschlüsse umfasst ein Gehäuse 1, in dem ein Steckdoseneinsatz 2 angeordnet ist. Das Gehäuse 1 ist mit einem Kragen 3 versehen, der in montiertem Zustand des Anschlussfeldes auf der Tisch- oder Geräteplatte bzw. dem Fußboden aufliegt. Der Kragen 3 überdeckt in montiertem Zustand die für die Aufnahme des Anschlussfeldes in der Platte oder dem Fußboden vorgesehene Öffnung.

Das Gehäuse 1 weist eine wannenartige Form auf. Es ist an seinen Stirnseiten mit Befestigungseinrichtungen 4 versehen, mit denen eine zuverlässige Befestigung des Anschlussfeldes an der Tisch- oder Geräteplatte bzw. dem Fußboden erfolgen kann. Auf seiner dem Kragen 3 abgewandten Seite ist das Gehäuse mit Schlitzen 5 versehen. Die Schlitze 5 ermöglichen das Abfließen von in das Gehäuse 1 eintretenden Flüssigkeiten. Ebenso besteht beispielsweise beim Einbau des erfindungsgemäßen Anschlussfeldes in einer Küche die Möglichkeit, Krümel oder der gleichen aus dem Gehäuse zu entfernen.

Der Kragen 3 weist auf seiner dem Fußboden oder der Tisch- oder Geräteplatte zugewandten Seite einen Hinterschnitt auf. Der Hinterschnitt ist zur Aufnahme einer - nicht dargestellten - Dichtung geeignet, so dass eine zusätzliche Sicherheit gegen das Eindringen von sich über die Platte oder den Fußboden ergießenden Flüssigkeiten geschaffen ist.

Der Steckdoseneinsatz 2 ist mit Steckplätzen 7 versehen. Bei den Steckplätzen handelt es sich im Ausführungsbeispiel um zwei Steckdosen für Netzspannungsanschlüsse und einen Steckplatz für Informationsanschlüsse. Selbstverständlich ist eine andere Verteilung und Anzahl an Steckplätzen als die im Ausführungsbeispiel gezeigte möglich. Der Steckdoseneinsatz 2 ist mit einem Vorsprung 8 versehen, in dem die Steckplätze 7 angeordnet sind. Erkennbar erstreckt sich im Ausführungsbeispiel der Vorsprung 8 über die gesamte Länge des Steckdoseneinsatzes 2. Der Vorsprung 8 weist dabei eine geringere Breite als der Steckdoseneinsatz 2 auf, wodurch an den Längsseiten des Vorsprungs 8 ein Rand 9 ausgebildet ist.

Der Steckdoseneinsatz 2 ist in dem Gehäuse 1 um 180° um seine Längsachse drehbar angeordnet. In Abwandlung des Ausführungsbeispiels besteht die Möglichkeit, andere Drehwinkel zu ermöglichen. So besteht beispielsweise die Möglichkeit, den Steckdoseneinsatz auch um 360° drehbar auszugestalten. Auch das Vorsehen eines geringeren Drehwinkels ist möglich, um beispielsweise eine dem Benutzer zugewandte, leicht schräg gestellte Einsteckposition zu realisieren.

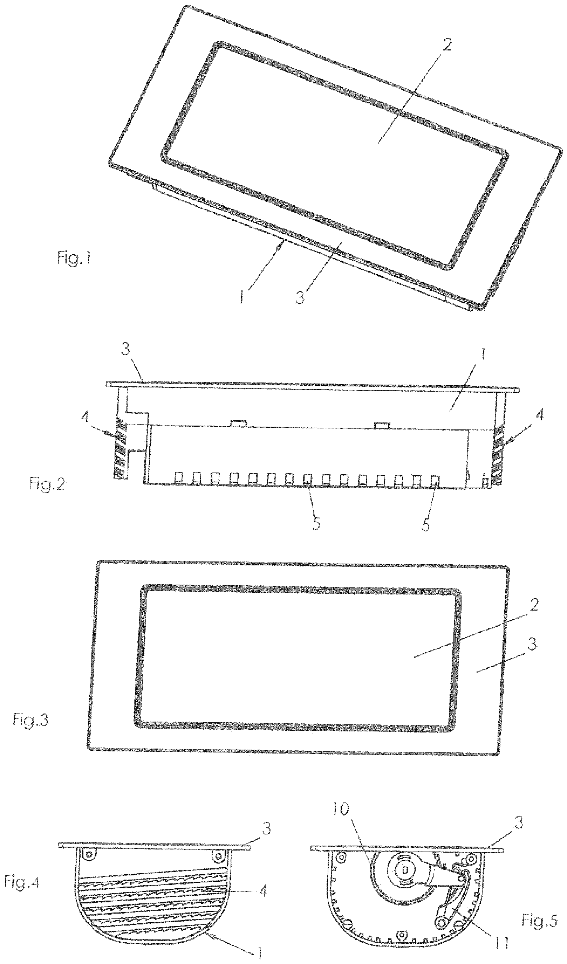

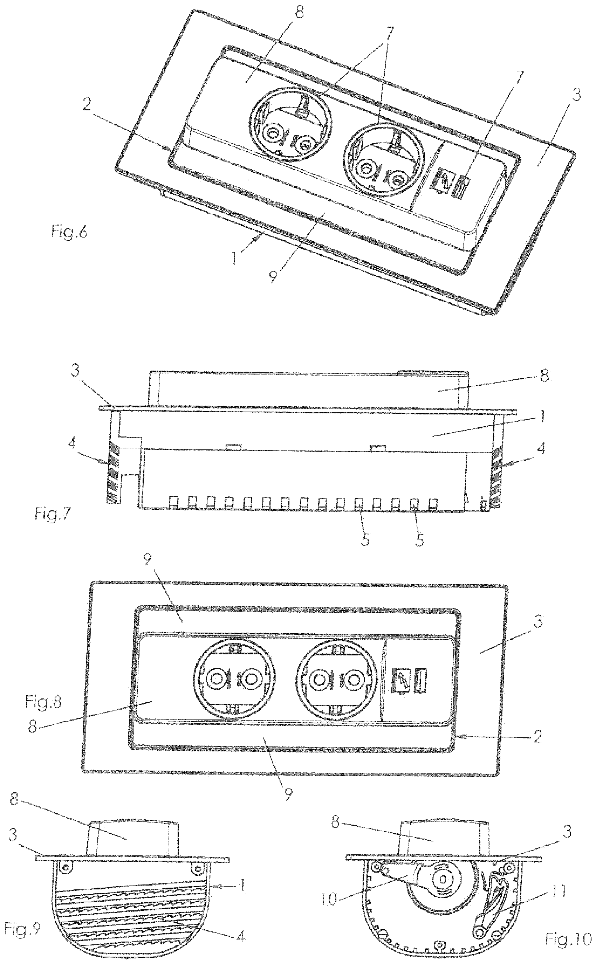

Im Ausführungsbeispiel ist an den Stirnseiten des Steckdoseneisatzes 2 ein Drehwinkelbegrenzer 10 vorgesehen. Der Drehwinkelbegrenzer 10 korrespondiert in geschlossener Position des Anschlussfeldes mit einer Kulisse 11, wie dies in Figur 5 erkennbar ist. In der betriebsbereiten Position des Anschlussfeldes befindet sich der Drehwinkelbegrenzer 10 dagegen in unmittelbarer Nähe zum Kragen 3 und dient somit als Anschlag, wie dies Figur 10 zu entnehmen ist.

Das erfindungsgemäße Tisch- oder Geräteplattenanschlussfeld stellt eine zuverlässige Absicherung gegen das Eindringen von Flüssigkeiten in die Steck plätze bei Anwendungen des Anschlussfeldes in Bereichen dar. Das Tisch- oder Geräteplattenanschlussfeld ist daher insbesondere für die Verwendung in Bereichen geeignet, in denen mit Flüssigkeiten hantiert wird. Dies ist durch die Ausbildung des Vorsprungs 8, in dem die Steckplätze 7 angeordnet sind, gewährleistet. Erkennbar steht der Vorsprung 8 in der Betriebsposition des Anschlussfeldes über den Kragen 3 und damit auch über die Tisch- oder Geräteplatte bzw. den Fußboden hervor. Sollte sich in Betriebsposition Flüssigkeit über die Platte oder den Fußboden ergießen, kann sich diese zwar über den Kragen 3 in Richtung des Steckdoseneinsatzes 2 ergießen; die Steckplätze 7 sind jedoch gegen sich ergießende Flüssigkeit aufgrund ihrer erhöhten Anordnung gesichert. Gleichzeitig kann durch die erfindungsgemäße Ausbildung des Anschlussfeldes in das Gehäuse 1 eintretende Flüssigkeit durch die Schlitze 5 am Boden des Gehäuses 1 austreten, so dass keine Ansammlung von Flüssigkeit in dem Gehäuse 1 zu befürchten ist. Die Funktionstüchtigkeit ist dadurch gewehrleistet. Gleichzeitig ist auch die Drehbarkeit des Steckdoseneinsatzes 2 in dem Gehäuse 1 unvermindert gewehrleistet, da aufgrund der im Verhältnis zum Steckdoseneinsatz 2 geringeren Breite des Vorsprungs 8 und dem damit ausgebildeten Rand 9 ein behinderungsfreies Drehen der Steckdoseneinsatzes 2 in dem Gehäuse 1 hervorgerufen ist.

## Patentansprüche

1. Tisch- oder Geräteplattenanschlussfeld für Netzspannungsanschlüsse und/oder für Informationsanschlüsse, mit einem Gehäuse (1), das mit einem Kragen (3) versehen ist, wobei ein Steckdoseneinsatz (2) mit Steckplätzen (7) vorgesehen ist, der in dem Gehäuse (1) um mindestens 180° um seine Längsachse drehbar angeordnet ist, wobei der Steckdoseneinsatz (2) mit einem Vorsprung (8) versehen ist, in dem die Steckplätze (7) angeordnet sind, **dadurch gekennzeichnet, dass** der Vorsprung (8) eine geringere Breite als der Steckdoseneinsatz (2) aufweist, und dass an den Längsseiten des Vorsprungs (8) ein Rand (9) ausgebildet ist, wobei sich der Vorsprung (8) über die gesamte Länge des Steckdoseneinsatzes (2) erstreckt und das Gehäuse (1) auf seiner dem Kragen (3) abgewandten Seite mit Schlitzen (5) versehen ist.

2. Anschlussfeld nach Anspruch 1, **dadurch gekennzeichnet, dass** der Kragen (3) einen Hinterschnitt aufweist.

## Claims

1. Table top or equipment panel connector panel for mains voltage connections and/or for information connections having a housing (1), which is provided with a collar (3), wherein a socket insert (2) with slots (7) is provided, which is arranged in the housing rotatably by at least 180° about its longitudinal axis, wherein the socket insert (2) is provided with a projection (8), in which the slots (7) are arranged, **characterised in that** the projection (8) has a smaller width than the socket insert (2) and that at the longitudinal sides of the projection (8) an edge (9) is designed, wherein the projection (8) extends over the entire length of the socket insert (2) and the housing (1) is provided with slots (5) on its side facing away from the collar (3).

2. Connector panel according to claim 1, **characterised in that** the collar (3) has an undercut.

## Revendications

1. Panneau de connexion pour appareil ou table, recevant des connexions de tension secteur et/ou des connexions informatiques, comprenant un boîtier (1) muni d'un collet (3), sachant qu'est prévu un insert (2) à prises comprenant des prises (7), insert qui est disposé dans le boîtier (1) de sorte à pouvoir tourner au moins à 180° autour de son axe longitudinal, sachant que l'insert (2) à prises est doté d'un boîtier en saillie (8) dans lequel sont disposées les prises (7), **caractérisé en ce que** le boîtier en saillie (8) présente une largeur inférieur à celle de l'insert (2) à prises et **en ce que** sur les côtés longitudinaux du boîtier en saillie (8) est configurée une bordure (9), sachant que le boîtier en saillie (8) s'étend sur toute la longueur de l'insert (2) à prises et que le boîtier (1) est muni de fentes (5) sur son côté opposé au collet (3).

2. Panneau de connexion selon la revendication 1, **caractérisé en ce que** le collet (3) présente une contre-dépouille.
